# EUROPEAN PATENT APPLICATION

(11) **EP 2 199 899 A1**
(43) Date of publication of application: **23.06.2010**
(21) Application number: 08254113.7
(22) Date of filing: 22.12.2008
(51) Int. Cl.: G06F 3/048

(54) **Touch sensitive display**

(71) Applicant: BRITISH TELECOMMUNICATIONS public limited company, London EC1A 7AJ (GB)
(72) Inventor: Matthews, Ian, Richard, Melton, Woodbridge Suffolk IP12 1PR (GB)
(74) Representative: Chabasseur, Vincent Robert

(57) **Abstract**

A communications device is provided with a touch sensitive display. In a first portion of the display, there is displayed a virtual button which can be moved linearly by a touch-and-drag action so as to select the content displayed in a second portion of the display. The tab button has a dynamic character associated therewith that is indicative of the selected content, the value of the dynamic character being a function of the linear position of the tab button. When the tab button is not being touched by a user's finger, the dynamic character is displayed on an active area of the tab button so as to guide the finger to the active area. However, when it is sensed that the finger touches the active area, the dynamic character is displayed at a different position, so as to reduce the likelihood that the character is obscured by the user's finger.

## Description

The present invention concerns a device, in particular a device having a touch sensitive display.

There exist many styles of input interfaces for performing input operations with a computer-related device. The operations generally correspond to moving a cursor and/or making selections on a display.

Of particular interest are devices having a touch sensitive screen or "touch screens". Various types of touch sensitive screens are known. These each typically include a touch panel which is generally clear with a touch sensitive surface. The touch panel is positioned in front of a display screen so that the touch sensitive surface covers the viewable area of the display screen. The touch panel registers touch events and sends these signals to a controller. The controller processes these signals and in response to the processed signals performs various tasks such as generating images for display and setting up a telephone call. In this way, a user can select a task for the device to peform by simply touching the surface of the touch sensitive screen with a finger, pen, or the like. In general, the touch sensitive screen recognizes the touch, which allows the device to perform an action based on the position of the touch.

Often, different parts of the screen are associated with different computer-related actions, which actions are indicated by a graphic symbol, such as a letter, word, numeral or icon. The position in the display of the graphic symbol is usually the position at which a user touch will cause the action associated with that symbol to be performed. This arrangement is helpful because it naturally guides the user to touch the screen in the correct position for a given action. However, the act of placing a finger or implement over the graphic symbol can sometimes at least partially obscure the symbol. As a result, this arrangement is not always convenient.

According to the present invention, there is provided a device having a touch sensitive display, the touch sensitive display having a touch area associated therewith which is sensitive to user touch, the device having a first state in which a graphic symbol is displayed in the touch area, and a second state in which the graphic symbol is displayed outside the touch area, wherein the device is responsive to a user touch such that a user touch within the touch area causes the device to change from the first state to the second state.

Because the device changes from the first state to the second state in response to a user touch in the touch area, the graphic symbol is likely to remain visible when the user is touching the display in the area where the graphic symbol would otherwise have been displayed. To avoid ambiguity, the graphic symbol will be duplicated in the touch area when the device is in the second state.

Preferably, the touch area is movable on the display in response to a dragging touch action by the user, the touch area having different functions or tasks associated therewith depending on the position of the touch area. In order to indicate the correct task associated with a given position, the graphic symbol displayed will also depend on the position of the touch area.

The touch area may have visible border and/or a character or other graphic symbol displayed therein so as to provide a virtual button. As a result, a user will be given the impression that the display behaves in a similar fashion to the keys of a conventional keyboard in that the different buttons are associated with different functions or operations. However, the touch area need not be visible on the display.

The graphic symbol will preferably move in step with the movable touch area, and the value of the symbol will preferably itself depend on the position of the touch area. The value of the graphic symbol can then be used to select information displayed in an area of the display.

The invention will now be further described, by way of example only, and with reference to the following drawings in which:
Figure 1 shows a communications device with an operational circuit;
Figure 2 shows in cross section the touch-sensitive display of Figure 1;
Figure 3 is a schematic view from the front of the touch-sensitive display;
Figure 4a shows is a block diagram of the operational circuit;
Figure 4b is a schematic view of an image;
Figures 5a-5b show a sequence of pages that are displayed; and,
Figure 6 shows schematically a touch area and an associated area in a displayed page.

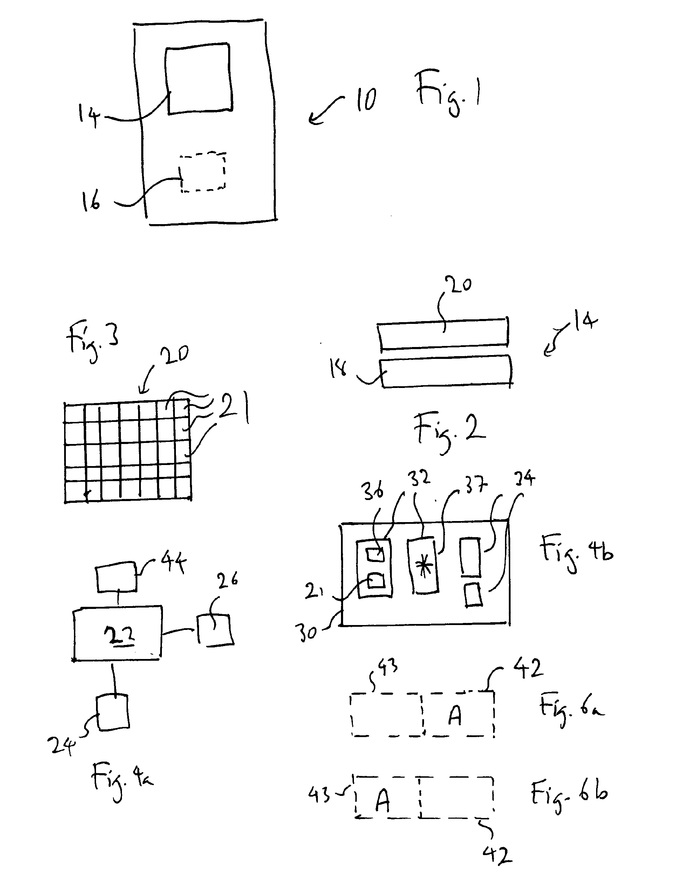

Figure 1 shows a communications device 10 having a front panel 12 to which there is mounted a touch sensitive dispay 14. An operational circuit 16 is provided within the device, for controlling the communications device, including the touch sensitive display 14 itself, in response to touch events in which the user touches the display 14.

The display, show in cross section in Figure 2, has an image-generating layer 18 for generating a visible image, hereinafter referred to as a page. Typically, the image-generating layer 18 will be formed by an array of light-emitting diodes, although rather than being light-emitting, the display could rely on differences in reflectivity to form an image. Positioned above the image-generating layer, a touch-sensitive layer is provided for sensing a user's touch, in particular a finger touch. The touch-sensitive layer 20 is arranged such that it lies in front of the image generating layer when the display 14 is facing the user, the touch-sensitive layer being sufficiently transparent for the page generated by the image generating layer 18 to be visible through the touch sensitive layer.

As shown schematically in Figure 3, the touch-sensitive layer 20 has an array of touch pixels, whose position can be defined by an x-y co-ordinate. Each touch pixel is provided with a touch sensor that is individually responsive to user touch over the pixel area (the touch sensors may be resistive, capacitative, or even optical). When a particular touch pixel is touched, the touch sensitive layer is arranged to generate a touch signal indicative of the x-y co-ordinate position of the pixel that it touched.

Referring to Figure 4a, the main functional elements of the operational circuit comprise a processor 22 operationally coupled to both the display 14 and to a memory 24. An interface module 26 is also provided, for transmitting and receiving communications traffic. The interface module may be a PSTN (Public Switched Telephone Network) interface for generating and receiving PSTN signals, or if the communications device is a cellular telephone, the interface module may include a GSM transceiver connected to an antenna.

The memory 24 has stored therein a plurality of image pages for display. In association with each given image, there is also stored a mapping that relates positions in the image with respective user input instructions. The processor operates under the control of a computer program, here an operating system, which provides instructions for controlling various aspects of the operation of communication device 10, such as transmitting or receiving calls, and the display of images.

The processor has access to the touch signals transmitted by the display 14, and is arranged to interpret these in dependence on the image currently being displayed on the display. This is done by retrieving the mapping associated with the image currently displayed, and, for a given touch signal, identifying the stored user input instruction corresponding to the position of that touch signal. In this way, different parts of an image can be associated with different user input instructions. Such a page is shown in Figure 4b. Some regions of the image are active regions 32, in that the touch signal resulting from touching an active part causes the processor to carry out an instruction, whereas other regions 34 of the image are passive, such that the processor ignores touch events in these parts. The active region has a plurality of touch areas 36, each containing a plurality of touch pixels 21, the touch pixels in a given touch area being mapped as a group such that their respective touch signals give rise to a common user input instructions.

A given touch area may be static, in that the touch area remains in the same position on a given image. However, a touch area may be movable, in that it can be dragged from one position to another by: touching the display in the touch area with a finger; maintaining touch contact with the finger whilst moving the point at which the finger makes contact with the display; and, subsequently removing the finger. The dragging action thereby moves the movable touch area from its initial position to the position at which the finger is released. In the case of a movable touch area, the touch sensitive layer is arranged to transmit a touch signal each time the touch area (that is, the area where contact is made with the display) moves from one touch pixel to another, thereby updating the processor with the current position of the touch area.

The memory has stored therein a list of contact names and, in association with each contact name, a respective telephone number. The processor 22, under the control of the operating system is arranged to generate various images which each have at least one touch area in which there is displayed an indication of a contact name, for example as a picture of the contact or a string of letters. For a given image, the stored mapping relates the touch area for a given contact name with one or more instructions related to that contact name. When a user touches the display in a touch area associated with that contact name, a touch signal is received by the processor. In response, the processor, under the control of the operating system, puts in to effect the or each instruction associated with the contact. One instruction may be to set up a call with the contact, in which case, the processor will pass a signal to the interface module, which signal instructs the interface module to transmit a calling signal over the PSTN line or over GSM.

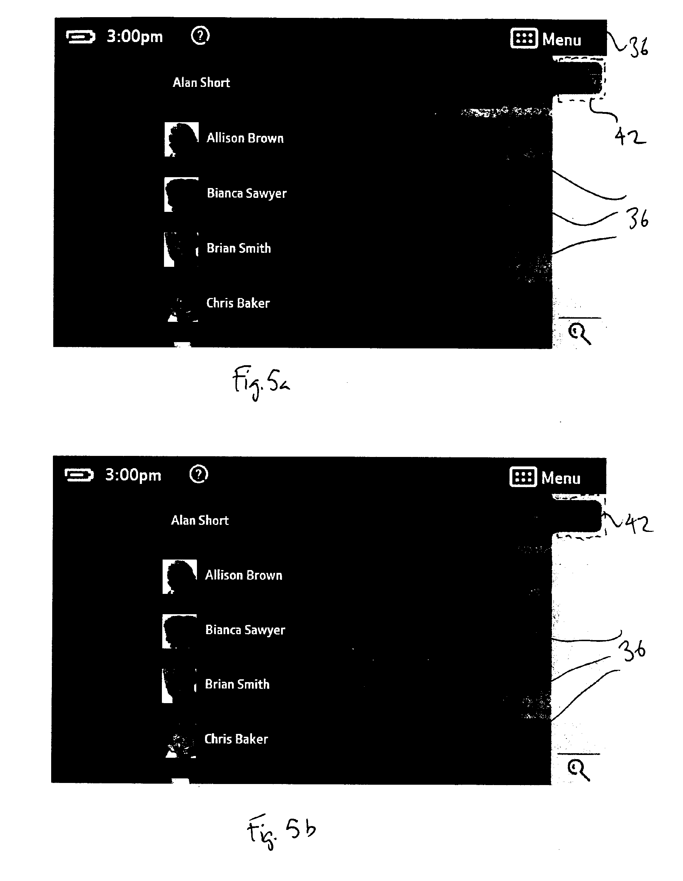

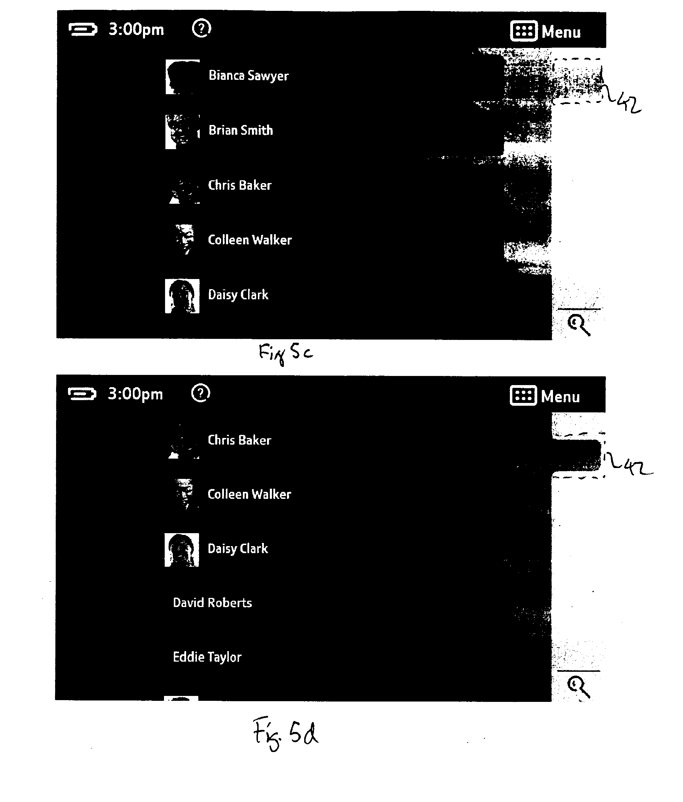

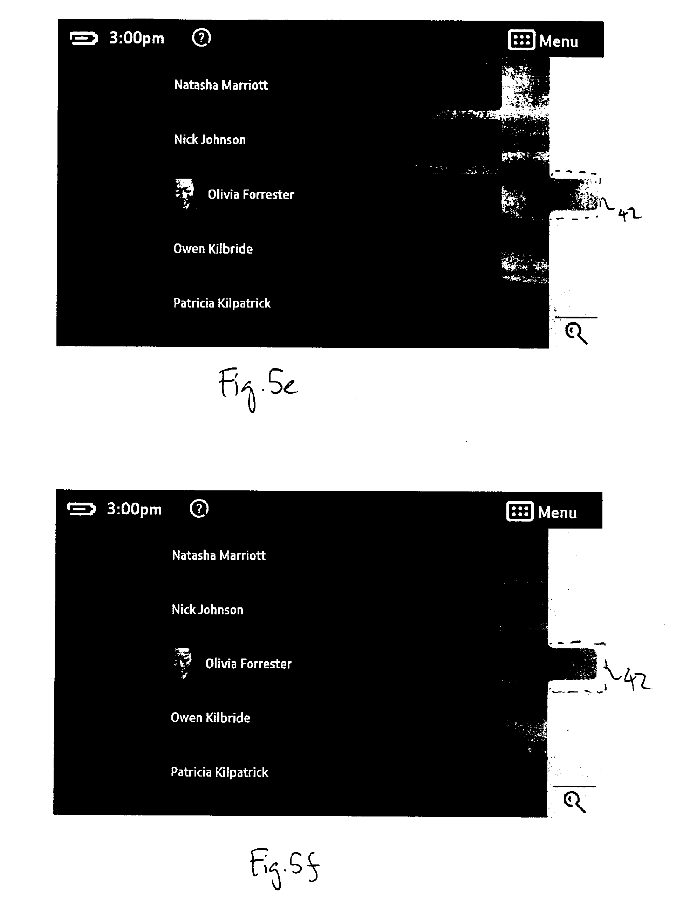

In one embodiment, the operating system controls the processor such that the processor retrieves the stored list of contact names and generates an image 30 in which the names are displayed next to one another in the form of a vertical column 40 as shown in Figure 5a. Each contact name is displayed in a respective touch area 36, enabling a user to select a displayed name by touching the touch area in which the name is displayed. The selection of a contact name can cause an new image to displayed in which further details for that contact name are displayed, or the selection can automatically cause a stored telephone number for that name to be dialed, depending on the settings of the operating system. Other touch areas 36 are provided in the image shown in Figure 5a. For example, touching the area where the term "menu" is displayed will cause a fresh image to be generated in which menu options are displayed.

In Figure 5a, some of the touch areas are visibly distinguishable from one another of from passive regions. For example, the different names are separated by passive regions, which passive regions visibly distinguishable from the touch areas as a result of a shading difference. However, the precise delineation of a given touch area need not correspond to a visible characteristic of the image, and the extent of a given touch area need not be visible.

As can be seen from Figure 5a, the names are displayed in alphabetical order, the name "Alan" appearing at the top of the column of names. Because of the limited area of the display, only a portion of the column of names is visible. In Figure 5a, only the uppermost portion of the column is shown, which contains five names, the last name being "Chris".

In order to choose the names to be displayed names (or equivalently in this example which portion of the column is to be displayed displayed), a movable touch area 42 is provided, indicated in Figure 5a as being within a dotted line (the dotted line is shown for convenience and is not visible in the displayed image). The movable touch area, hereinafter referred to as a tab button, is represented as a shaded area extending horizontally from the column of names in the manner of conventional tab index. The tab button is linearly movable in the vertical direction in the orientation of Figure 5a, curved or horizontal movement of the tab button being prevented in the present embodiment.

The vertical position of the tab button 42 determines which portion of the vertical list of names is displayed. The tab button has a dynamic character displayed thereon, also dependent on the vertical position of the tab button, which indicates the alphabetical position of that part of the list of names that is being displayed.

In order to support the dynamic functionality of the tab butten, there is stored in memory a correspondence table associating each tab position with a given character. The processor is arrange to retrieve the table and determine the character corresponding to the last received touch signal, which indicates the current position of the tab button, and to cause the so-determined character to be displayed in or next to the tab button. The correspondence table also includes an indication of a respective portion of the contact list corresponding to each character, so that the processor can retrieve those names from memory which correspond to the current character of the tab button.

In Figure 5a, the tab button is at the top of its travel, and consequently displays the character "A". Correspondingly, the display is shows as many names as there is room for starting with the letter "A". As there are only two names beginning with "A", the next three names of the column listed in alphabetical order are also shown. The tab button thus allows the selection for display of the names beginning with the letter displayed at the button. In the present example, the lower the position of the tab in the display, the higher the position of the letter in the alphabet to which the tab button corresponds.

In order to view that portion of the column containing names beginning with N, the user touches the tab button with a finger and drags it through the intermediate positions shown in Figures 5b-5e and subsequently lifts the finger from the display so as place the display as shown in Figure 5f. Here, the tab button displays the letter N, and names beginning with N are shown in alphabetical order, with names further down the alphabet also being shown because there is space for these names. The display can be considered to be a sliding window over the column of alphabetically arranged names, the letter shown in the tab button being an indication of the position of the window. In this way, the user can slide the tab in the vertical direction and thereby choose which portion of the column of names is displayed.

In order to allow the user to more clearly see the letter to which the tab button corresponds as the tab button is being moved, the tab button has an associated area 43 near to the touch area of the tab button, as illustrated in Figures 6a and 6b. When the tab button is not being touched, the operating system is arranged to control the processor such that it generates an image in which letter of the tab button is shown in the actual touch area of the button. However, when a touch signal is received at the processor which indicates that the display is touched in the touch area of the tab button, the processor is arranged to refresh the displayed image such that the letter is displayed in the associated area rather than the touch area. Since the user is likely to place a finger over the letter (here an A) when attempting to drag the button, by displaying, in the associated area, the letter that would otherwise have been displayed in the touch area, the likelihood is reduced that the user's finger will obscure the displayed letter associated with the tab button.

In this way, the processor is arranged to sense the area at which a finger touches the display, and effectively move the letter (which need not be a letter but could instead be different graphic symbol) away from the area that is being touched, so that that letter can remain visible.

The ability of the user to see the letter corresponding to the position of the tab button is important because the user can select a letter by dragging the tab button with his or her finger, and then removing the finger when the letter to be selected is displayed.

In response to a touch event, the letter of the tab button is displaced in a direction that is normal to the direction of travel of the tab button. That is, whereas the tab button can be dragged only in the vertical direction, the letter is displaced in a horizontal direction. As a result, the tab button is movable along a first line, whereas the position of the corresponding letter follows the movement of the tab button (or the point of contact as a finder is dragged along the display) and is thereby movable along a second line parallel to the first line.

In Figures 6a and 6b, the touch area of the tab button and the associated area are shown for convenience as being delineated by a dotted line. In practice, the line dividing the touch area and the associated area will not be visible. Furthermore, in practice, the associated area may overlap the touch area of the tab button, or may form part or all of a touch area for a different button, provided that the associated area is removed from the letter displayed at the tab button. In this way, the letter can be caused to behave as if it is moving out of the way of the finger. To give the impression that the character moves out of the way of the finger in a progressive fashion, one or more intermediate images may be generated and the letter may be successively displayed in one or more intermediate positions between the positions show in Figures 6a and 6b in response to a user touching the tab button.

The associated area in the present example is passive. However, the associated area could instead by an active touch area. This would allow an informed user to drag the tab button by touching the area next to the displayed letter, whilst a less informed user would then still be able to benefit from the above functionality if he or she performed by dragging action by touching the area of the letter itself. Nevertheless, the area in which the letter is displayed is likely to act as a target area, directing the users touch to that area, making it more likely that a user will first choose that area for dragging rather than an area next to the letter.

The sequence of events which occur when a user selects a contact can be seen with reference to Figures 5a-5f. Initially, the display is in the state illustrated in Figure 5a. The tab button is in the uppermost position and the first letter of the alphabet is displayed in the touch area of the tab button. When a person places a finger over the tab button the resulting touch signal causes the processor to generate a fresh image as shown in Figure 5b, in which the letter A is displaced horizontally whereas the vertical position of the tab button remains unchanged. That is, the letter A is no longer displayed in the touch area of the button, but in the associated area instead. As the user begins to drag the tab button downwards, the letter A remains displayed next to the tab button, and follows the tab button in the downward direction. Each time a touch signals is generated as the tab button is moved over a new touch pixel, the processor analyses the touch signal on the basis of the correspondence table stored in memory to check if the new position of the tab button required the corresponding letter to be changed. When, from the correspondence table, it is determined that the tab button position corresponds to the letter B, the processor refreshes the displayed image with an image in which the letter B is displayed next to the tab button. Because the tab button is in the position for the letter B, the contact list to the side of the tab button shows names beginning with the letter B.

In a similar fashion, as shown in Figure 5d, continued downward dragging of the tab button results in the button being in the "C" position, and the contact list showing names starting with C. Yet further movement results in the tab being at the "N" position, in which names starting with N are displayed at the top of the displayed portion of the contact list. When the finger is removed as shown in Figure 5f, the position at which the character is displayed, here the letter N, returns to the touch area of the tab button. The user can then initiate a call with any one of the displayed contact names by selecting that name through the touching of the touch area on the display associated with that name.

In summary, it can be seen that the communications device described above is provided with a touch sensitive display. In a first portion of the display, there is displayed a virtual button which can be moved linearly by a touch-and-drag action so as to select the content displayed in a second portion of the display. The tab button has a dynamic character associated therewith that is indicative of the selected content, the value of the dynamic character being a function of the linear position of the tab button. When the tab button is not being touched by a user's finger, the dynamic character is displayed on an active area of the tab button so as to guide the finger to the active area. However, when it is sensed that the finger touches the active area, the dynamic character is displayed at a different position, so as to reduce the likelihood that the character is obscured by the user's finger.

## Claims

1. A device having a touch sensitive display, the touch sensitive display having a touch area associated therewith which is sensitive to user touch, the device having a first state in which a graphic symbol is displayed in the touch area, and a second state in which the graphic symbol is displayed outside the touch area, wherein the device is responsive to a user touch such that a user touch within the touch area causes the device to change from the first state to the second state.

2. A device as claimed in claim 1, wherein the devices is arranged such that the touch area can be moved from one position in the display to another position in the display in response to user touch.

3. A device as claimed in claim 2, wherein the device is responsive to a touch action having a contact area associated therewith such that movement of the contact area along the display causes the touch area to follow the movement of the contact area.

4. A device as claimed in claim 2 or claim 3, wherein the movement of the touch area is restricted to a linear movement in a travel direction.

5. A device as claimed in claim 4, wherein the graphic symbol is displayed in the first and second states at the same level in the travel direction.

6. A device as claimed in any of the preceding claims, wherein the graphic symbol displayed depends on the position of the touch area.

7. A device as claimed in any of the preceding claims, wherein the devices is arranged to display one or more data entries, the displayed data entries being dependent on the position of the touch area.

8. A device as claimed in any of the preceding claims, wherein the graphic symbol is a single letter.

9. A device as claimed in any of the preceding claims, wherein the touch sensitive display is sensitive to the touch of a human finger.

10. A device as claimed in any of the preceding claims, wherein the device is a communications device.

11. A device as claimed in any of the preceding claims, wherein the user touch has a duration associated therewith, and wherein the device is arranged to remain in the second state for the duration of the user touch.

12. A device as claimed in claim 11, wherein the device is arranged to revert to the first state when the user touch ceases.
